# EUROPÄISCHE PATENTSCHRIFT

(11) **EP 0 647 839 B1**
(45) Veröffentlichungstag und Bekanntmachung des Hinweises auf die Patenterteilung: **02.12.1998**
(21) Anmeldenummer: 94250240.2
(22) Anmeldetag: 07.10.1994
(51) Int. Cl.: G01K 17/20

(54) **Verfahren zur Bestimmung der Wärmedurchgangszahl in einem temperaturgeregelten Reaktor**
Method of determining the heat transmission coefficient in a temperature controlled reactor
Procédé pour déterminer le coéfficient de transmission thermique dans un réacteur contrôlé en température

(30) Priorität: 08.10.1993 DE 4334828
(43) Veröffentlichungstag der Anmeldung: 12.04.1995
(73) Patentinhaber: Carloff, Rüdiger, Dr.rer.nat., D-64347 Griesheim (DE); Pross, Alexander, Dipl.-Chem., 51375 Leverkusen (DE); Reichert, Karl-Heinz, Prof.Dr.rer.nat., 14055 Berlin (DE)
(72) Erfinder: Carloff, Rüdiger, Dr.rer.nat., D-64347 Griesheim (DE); Pross, Alexander, Dipl.-Chem., 51375 Leverkusen (DE); Reichert, Karl-Heinz, Prof.Dr.rer.nat., 14055 Berlin (DE)
(74) Vertreter: Henze, Lothar

(56) Entgegenhaltungen:
- DE-A- 3 049 105
- DE-A- 3 136 225
- DE-A- 4 034 115
- CHEMICAL ENGINEERING AND TECHNOLOGY, Bd.12, 4. Januar 1989, WEINHEIM (DE) Seiten 379 - 387 W. ROETZEL 'MEASUREMENT OF HEAT TRANSFER COEFFICIENTS IN TUBES BY TEMPERATURE OSCILLATION ANALYSIS'
- PATENT ABSTRACTS OF JAPAN vol. 9, no. 221 (P-386) 7. September 1985 & JP-A-60 080 748 (SHINKUU RIKOU KK) 8. Mai 1985
- PATENT ABSTRACTS OF JAPAN vol. 9, no. 257 (P-396) 15. Oktober 1985 & JP-A-60 107 556 (SHINKUU RIKOU KK) 13. Juni 1985

## Beschreibung

Die Erfindung betrifft ein kombiniertes Verfahren bestehend aus einer Vorschrift für die Betriebsweise eines temperaturgeregelten Behälters für chemische Reaktionen, vorzugsweise Rührkesselreaktors, sowie einem mathematischen Verfahren, mit dem die während einer chemischen Reaktion veränderliche Wärmedurchgangszahl der Wärmeaustauschfläche, vorzugsweise der Reaktorwand, basierend auf der Wärmebilanz des Reaktorinnenraums, jedoch ohne Kenntnis der momentanen Reaktionsgeschwindigkeit aus den während der chemischen Reaktion gemessenen Temperaturen von Reaktionsmedium und Wärmetauschermedium bestimmt wird.

Bei chemischen Reaktionen mit deutlicher Abnahme der Wärmedurchgangszahl der Reaktorwand (z. B. Reaktionen mit Viskositätszunahme, Wandbelagsbildung oder Phasenübergängen) wird die Wärmeabfuhr aus dem Reaktor erheblich behindert, was bei einer zu kleinen Auslegung der Reaktorkühlkapazität zum thermischen Durchgehen des Reaktors und damit zu einem Betriebsunfall führen kann. Für die chemische Sicherheitstechnik ist deshalb die simultane Verfolgung der Wärmedurchgangszahl und der Reaktionsgeschwindigkeit von großem Interesse.

Die Wärmebilanz des Reaktorinnenraums enthält neben der Wärmedurchgangszahl die momentane Reaktionsgeschwindigkeit als zweite veränderliche unbekannte Betriebsgröße. Mithin kann allein aus der Wärmebilanz des Reaktorinnenraums keine der beiden Größen bestimmt werden. Andererseits kann bei Kenntnis der Wärmedurchgangszahl die momentane Reaktionsgeschwindigkeit aus der Temperaturdifferenz von Reaktionsmedium und Wärmetauschermedium leicht bestimmt werden. Dieses Verfahren wird in der Literatur meist als konduktive Reaktionskalorimetrie oder Wärmeflußkalorimetrie bezeichnet.

Die bisherige Methode zur simultanen Bestimmung der während einer im zeitlichen Mittel isothermen Reaktion veränderlichen Wärmedurchgangszahl des Reaktors und der Reaktionsgeschwindigkeit ist die Koppelung der Wärmebilanz des Reaktorinnenraums mit der Wärmebilanz des mit Wärmetauschermedium gefüllten Reaktormantelraums, in der Literatur meist als konvektive Reaktionskalorimetrie oder Wärmebilanzkalorimetrie bezeichnet. Nachteilig an dieser Methode ist, daß sie hohe Anforderungen an die Güte der Temperaturmessung (Auflösung, Genauigkeit, Reproduzierbarkeit, Ansprechverhalten) sowie an die genaue Kenntnis des Volumenstroms des Wärmetauschermediums, der thermisch wirksamen Wärmekapazitäten von Reaktorinnenraum und -mantelraum, der Verlustwärmeströme beider Bilanzräume und der Wärmedissipation aller im Mantelraum installierten Pumpen stellt. Insbesondere im Bereich der Laborreaktoren (Volumen 0,1-10 Liter) sind die zur Wärmebilanzierung des Reaktormantelraums notwendigen Temperaturdifferenzen unerwünscht klein, da das Verhältnis von Reaktionsvolumen zu Wärmeaustauschfläche gegenüber größeren Kesseln ungünstiger ist.

Eine Methode zur Messung der Wärmeproduktionsrate eines großtechnischen Reaktors mittels eines Kalorimetersensors ist in der Patentschrift DE 40 34 115 C1 aufgeführt. Dazu wird aus dem zu überwachenden Produktionsreaktor ein kleiner Stoffstrom abgezweigt und in ein parallel arbeitendes Kalorimeter geführt. Aus den Wärmebilanzen der Meßkammer und des umgebenden Thermostaten kann die Wärmeproduktionsrate des Meßkammerinhaltes bestimmt und daraus auf die Wärmeproduktion des eigentlichen Reaktors geschlossen werden. Erfindungswesentlich ist hierbei, daß das Problem der exakten kalorimetrischen Bilanzierung eines großtechnischen Reaktors durch den Tandembetrieb eines Kalorimeters von der Größe eines Laborreaktors (empfohlenes Volumen 0,1 bis 1,5 Liter) umgangen wird. Der dafür zu betreibende Aufwand ist jedoch auch nur für großtechnische Prozesse als wirtschaftlich gerechtfertigt anzusehen, während er etwa für Technikumsinstallationen nicht in Frage kommt. Weiterhin ist das Verfahren ungeeignet für starken Viskositätsanstieg und bei stofftransportkontrollierten Prozessen müssen durch geeignete Ansätze zur Maßstabsübertragung in der Meßzelle die gleichen hydrodynamischen Gegebenheiten erzeugt werden wie im Produktionsreaktor. Schließlich kann ein heterogenes System eine unvorhersehbare Neigung zur Wandbelagsbildung haben, die im ungünstigen Falle im Produktionsreaktor, nicht jedoch in der Meßkammer auftritt und folglich nicht detektiert wird.

In der Patentschrift DE 31 36 225 C2 wird ein Wärmeübergangs-Prüfelement zur Bestimmung der Tendenz der Belagsbildung und der daraus resultierenden Änderung des Wärmedurchganges in einem von einem verunreinigten Fluid durchströmten Rohr beschrieben. Es besteht aus einem transparenten äußeren Rohr und einem koaxialen inneren Rohr, in das ein Heizelement mit definierter Leistungsabgabe eingebettet ist. Der sich ergebende Ringspalt wird von dem verunreinigten Fluid mit definiertem Volumenstrom durchflossen. An der Oberfläche des inneren Rohres sind mehrere Thermoelemente angeordnet, um die Temperaturdifferenz zwischen dem strömenden Fluid und der Rohroberfläche zu messen. Hieraus wird ein Ablagerungsfaktor als qualitatives Maß für die flüssigkeitsseitige Wärmeübergangszahl an der Oberfläche der Sonde errechnet. Zweck dieser Anordnung ist, durch geregelte Zugabe von ablagerungsinhibierenden Additiven zum verunreinigten Fluid den Prozeß der Ablagerung möglicht zu unterbinden oder zu kontrollieren. Für reaktionskalorimetrische Untersuchungen eignet sich dieses Verfahren nicht.

Eine Methode zur Messung des inneren Wärmeübergangskoeffizienten von durchströmten Rohren durch Temperaturschwingungen wird von W. Roetzel: "Measurement of of Heat Transfer Coefficients in Tubes by Temperature Oscillation Analysis", Chemical Engineering and Technology *12* (1989), 379-387, angegeben. Bei diesem Verfahren werden durch periodisches Mischen von kalten und warmen Mengenströmen am Eingang eines durchströmten Rohres Temperaturschwingungen in Strömungsrichtung erzeugt, die durch Fourier-Analyse ausgewertet werden.

Das im zitierten Artikel verwendete durchströmte Rohr ist auf einer Seite der Wärmeaustauschfläche thermisch isoliert, so daß im Gegensatz zum Reaktor keine Temperaturregelung über eine Wärmeaustauschfläche möglich ist, mithin keine im zeitlichen Mittel isotherme chemische Reaktion. Da keine chemische Reaktion im Rohr abläuft, ist der Wärmeübergangskoeffizient der Rohrinnenseite während der gesamten Meßzeit konstant. Durch den konstanten Wärmeübergangskoeffizienten ergibt sich bei der dargestellten Auswertemethode der Temperaturschwingungen durch Fourier-Analyse eine zeitlich konstante Phasenbeziehung zwischen der Schwingung der Rohrinnentemperatur und der Rohrwandtemperatur. In chemischen Reaktoren kann sich jedoch, z. B. durch eine Viskositätszunahme des Reaktionsmediums oder durch Wandbelagsbildung einer oder beider Seiten der Wärmeaustauschfläche, sowohl der Wärmeübergangskoeffizient der reaktionsseitigen Reaktorwand als auch der Wärmeübergangskoeffizient der mantelseitigen Reaktorwand signifikant ändern. Die für die Wärmebilanz relevante Wärmedurchgangszahl ergibt sich unter anderem aus den beiden Wärmeübergangskoeffizienten der Wandoberflächen.

Der Erfindung lag deshalb die Aufgabe zugrunde, ein Verfahren zur Bestimmung der veränderlichen Wärmedurchgangszahl in einem Rührkesselreaktor anzugeben, mit dem ein derartiges zweiseitiges und instationäres Wärmedurchgangsproblem behandelt werden kann, wobei zur Bedingung gemacht wurde, daß die momentane Reaktionsgeschwindigkeit nicht a priori bekannt sein muß.

Die Aufgabe wird durch die Merkmale des 1. Patentanspruchs gelöst. Zweckmäßige Ausgestaltungen der Erfindung sind in den Unteransprüchen angegeben.

Das erfindungsgemäße Verfahren sieht vor, dem temperaturgeregelten Reaktor während der Reaktion durch eine in das Reaktionsmedium eintauchende Wärmequelle derart, vorzugsweise periodisch, Wärme zuzuführen daß im Reaktorinnenraum und, als Folge der Wärmeabfuhr durch die Reaktorwand, im Reaktormantelraum Temperaturschwingungen erzeugt werden. Mit Hilfe von periodischen Funktionen werden die zu den periodischen Schwingungen gehörenden Frequenzanteile der einzelnen Terme der Wärmebilanz des Reaktorinnenraums berechnet. Die Frequenzanteile gleicher Frequenz der einzelnen Glieder der Wärmebilanz stehen über die Wärmedurchgangszahl der Reaktorwand miteinander in Beziehung.

Bei der hier dargestellten Erfindung treten im Gegensatz zur Methode von *Roetzel* zwei Phasenverschiebungen auf, eine zwischen den Schwingungen der Reaktortemperatur und dem periodisch veränderlichen Wärmestrom, die andere zwischen den Schwingungen der Reaktorinnentemperatur und der Reaktormanteltemperatur, die sich infolge der chemischen Reaktion und der damit verbundenen Änderung der Wärmedurchgangszahl beide zeitlich ändern. Infolge der zeitlichen Änderung der Wärmedurchgangszahl geht die Wärmebilanz des Reaktorinnenraumes von einer linearen in eine nichtlineare Differentialgleichung über. Somit ergeben sich für die Auswertung der Temperaturschwingungen mehr Unbekannte in der Wärmebilanz des Reaktors als beim durchströmten Rohr ohne Reaktion, so daß die bei *Roetzel* angegebene Methode die der Erfindung zugrundeliegende Aufgabe nicht lösen kann.

Die Erfindung hat den Vorteil, daß durch Einbringen eines bekannten Wärmestroms in einen temperaturgeregelten Reaktor durch ein mathematisches Verfahren allein aus der Kenntnis der Temperaturen von Reaktionsmedium und Wärmetauschermedium, ohne vorherige Kenntnis irgendwelcher anderer Betriebs- oder Stoffgrößen und ohne Kenntnis der Wärmebilanz des Reaktormantelraums die veränderliche Wärmedurchgangszahl der Wärmeaustauschfläche und somit auch die momentane Reaktionsgeschwindigkeit in Abhängigkeit von der Reaktionszeit ermittelt werden kann, wobei der Modus der Reaktionsführung beliebig gewählt werden kann und die Reaktorgröße keinen Beschränkungen unterworfen ist.

Die Erfindung soll an einem Ausführungsbeispiel anhand der Zeichnungen näher erläutert werden. In den Zeichnungen zeigen:
- Fig. 1: einen prinzipiellen Geräteaufbau zur Bestimmung der veränderlichen Wärmedurchgangszahl in einem temperaturgeregelten Rührkesselreaktor.
- Fig. 2: durch den periodischen, sinusförmigen Wärmeeintrag in den temperaturgeregelten Rührkesselreaktor verursachte Schwingungen der Reaktor- T_{R} und Reaktormanteltemperatur T_{M} des im Anwendungsbeispiel beschriebenen Versuches.
- Fig. 3: den Verlauf des Wärmedurchgangswertes aus den Temperaturschwingungen des im Anwendungsbeispiel beschriebenen Versuches.

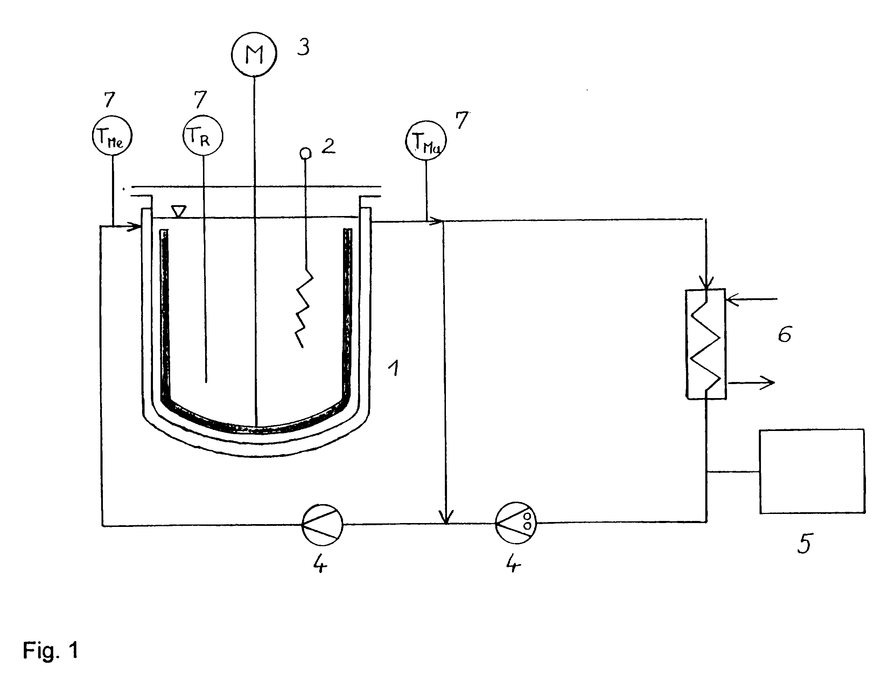

In **Fig. 1** ist ein typischer Versuchsaufbau skizziert, bei dem einem Rührkesselreaktor **1** über eine im Reaktor befindliche Wärmequelle **2** während des gesamten Reaktionsablaufs periodisch, vorzugsweise sinusförmig, Wärme zugeführt wird. Ein Rührwerk **3** sorgt für eine nahezu homogene Durchmischung der eingebrachten Wärme. Um die Reaktionswärme abzuführen, wird ein Wärmetauschermedium durch den Reaktormantelraum **4** gefördert. Die Reaktortemperatur *T*_{R}, die Manteleingangs- und Mantelausgangstemperatur *T*_{M,e}, *T*_{M,a} werden gemessen **7**. Ein Temperaturregler bewirkt, daß die Reaktortemperatur, über eine Schwingungsperiode gemittelt, nahezu konstant ist.

Im Ausführungsbeispiel wurde ein 2 Liter Doppelmantel-Rührkesselreaktor verwendet, mit einer im Reaktor befindlichen elektrischen Wärmequelle. Die Temperaturen wurden mit Pt-100-Widerständen gemessen. Zur Meßwertaufnahme und Temperaturregelung diente ein Computer. Der Computer und die vom Regler angesteuerte elektrische Heizung für das Wärmetauschermedium sind im Block **5** zusammengefaßt. Der Wärmetauscher **6** kühlt das Wärmetauschermedium wieder ab.

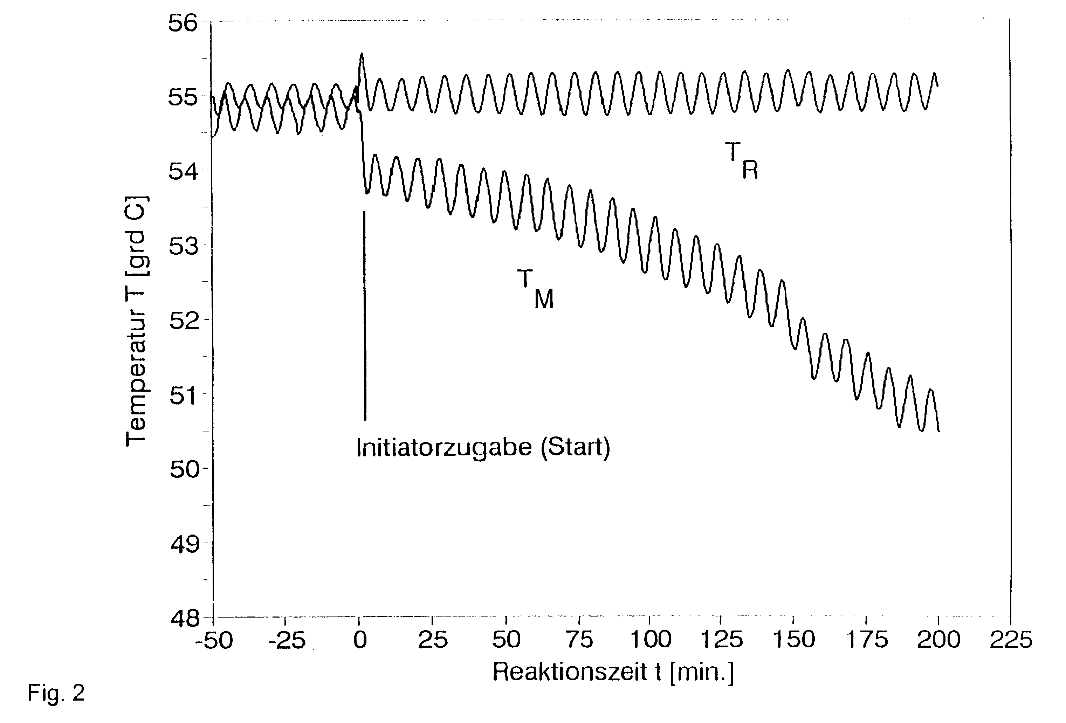

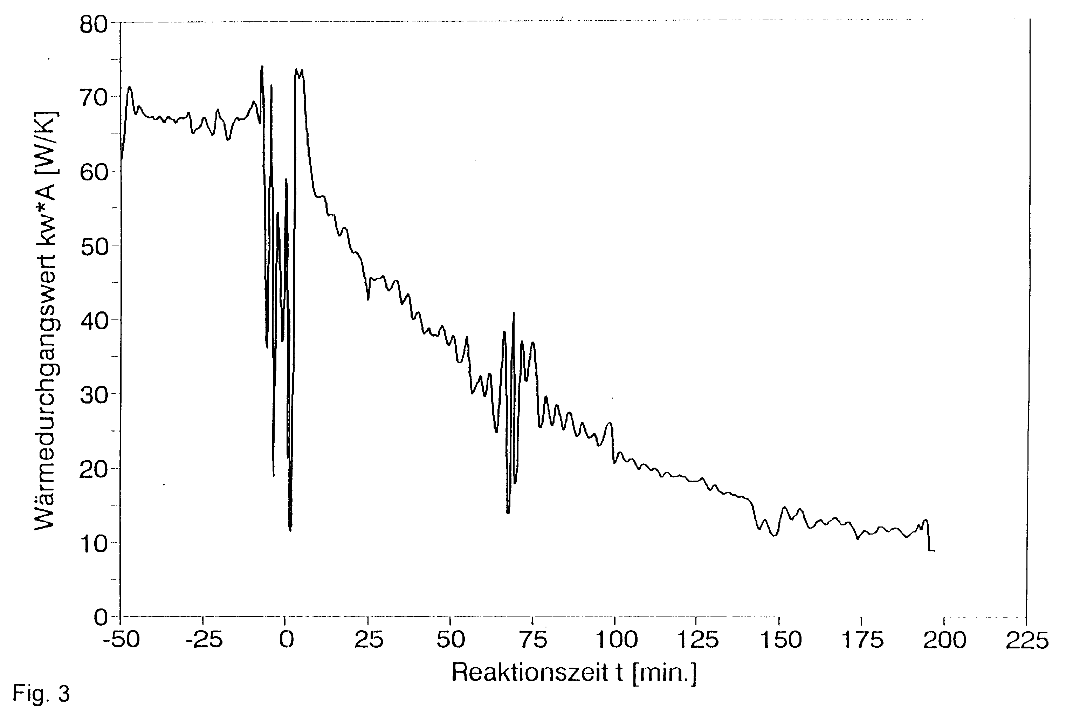

In **Fig. 2** ist als Beispiel der Verlauf der Reaktor- und der Reaktormanteltemperatur sowie in **Fig. 3** der Verlauf des Produktes aus Wärmedurchgangszahl *k*_{W} und Wärmeaustauschfläche *A* des verwendeten Rührkesselreaktors als Funktion der Reaktionszeit für eine homogene radikalische Polymerisation von Methylmethacrylat im Lösungsmittel Essigsäureethylester in Lösung dargestellt. Bei dem Experiment wurden 1080g Methylmethacrylat in 816g Essigsäureethylester mit 1.9g 1-Dodecylmercaptan, durch 10.05g des Initiators 2,2'-Azo-bis(2,4-dimethylvaleronitril) bei 55°C polymerisiert. Die mittlere Heizleistung der Wärmequelle im Reaktor betrug 12 Watt und die Periodendauer 438 Sekunden.

Wie in **Fig. 3** dargestellt, nimmt die Wärmedurchgangszahl durch Zunahme der Viskosität des Reaktionsgemisches während der Polymerisation ab.

Durch die periodisch zugeführte Heizleistung ergeben sich periodische Änderungen in der Reaktor- und Reaktormanteltemperatur, die detektiert und aufgezeichnet werden. Grundlage für die Berechnung der Wärmedurchgangszahl zwischen Reaktorinhalt und Reaktormantel ist die Wärmebilanz des Reaktorinnenraums, in die die Temperaturschwingungen eingehen, wobei für die Manteltemperatur vorzugsweise der Mittelwert zwischen Manteleingangs- und Mantelausgangstemperatur genommen wird. Die Wärmebilanz wird mit einer Reihe, die aus periodischen Funktionen zusammengesetzt ist, vorzugsweise Sinus- bzw. Cosinusfunktion, multipliziert und über eine Schwingungsperiode integriert, so daß die nicht zu den periodischen Funktionen orthogonalen Anteile gleicher Frequenz der einzelnen Terme der Wärmebilanz Werte ungleich null ergeben. Diese Werte setzen sich zusammen aus den Amplituden der einzelnen Temperaturschwingungen und deren Phasenlagen bezüglich der Schwingungen der periodisch gesteuerten Wärmequelle. Für die Frequenz der periodischen Funktionen der multiplizierenden Reihe, sind vorzugsweise ganzzahlige Vielfache der Grundschwingung der periodisch gesteuerten Wärmequelle zu verwenden. Von den einzelnen Termen der multiplizierenden Reihe liefert die Grundschwingung den rauschärmsten Anteil an der Wärmedurchgangszahl. Durch die erfindungsgemäße Annahme, daß die Verlustleistung und die Reaktionswärme während einer Schwingungsperiode zeitlich konstant sind, ergeben sie keinen Beitrag bei der Integration über eine Schwingungsperiode. Erfindungsgemäß wird bei der Integration der Wärmebilanz über eine Schwingungsperiode die Wärmedurchgangszahl als konstant angenommen. Die Frequenzanteile gleicher Frequenz der einzelnen Glieder der Wärmebilanz stehen dann über die Wärmedurchgangszahl direkt miteinander in Beziehung. Die zeitliche Änderung der Wärmedurchgangszahl während der Reaktion führt zu einer zeitlichen Veränderung der Phasenlage und der Amplitude der Temperaturschwingungen. Um die zeitliche Änderung der Wärmedurchgangszahl zu erfassen, wird die aus der Integration der Wärmebilanz über eine Schwingungsperiode erhaltene Wärmedurchgangszahl dem entsprechenden mittleren Zeitpunkt der Schwingungsperiode zugeordnet. Im nächsten Schritt wird die Wärmebilanz wie oben beschrieben wieder über eine Schwingungsperiode integriert, wobei jetzt die um einen Abtastpunkt verschobenen Meßwerte in die Wärmebilanz des Reaktorinnenraums einzusetzen sind. Durch dieses Verfahren lassen sich auch die sich in einer Schwingungsperiode ändernden Wärmedurchgangszahlen berechnen. Durch die Änderung der Phasenlage der einzelnen Schwingungen kann sich bei der Berechnung der Wärmedurchgangszahl ein mathematisch nicht definierter Ausdruck ergeben (null dividiert durch null), was in der Nähe dieses Ausdrucks zu starken Schwingungen in der berechneten Wärmedurchgangszahl führt (vgl. Fig. 3). Diese Schwingungen können reduziert werden, indem der Nenner des Ausdrucks der Wärmedurchgangszahl geeignet geglättet wird, oder daß die multiplizierenden periodischen Funktionen vor Beginn der Reaktion so gegen die Schwingung der Wärmequelle phasenverschoben werden, daß der Nenner des Ausdrucks zur Berechnung der Wärmedurchgangszahl positiv ist. Bei der numerischen Auswertung der Temperaturschwingungen werden die sich aus den Zeitkonstanten des Wärmeübergangs, des Reaktors und der Sensoren der Temperaturmessung ergebenden Phasenverschiebungen bei der Zuordnung der einzelnen Meßpunkte mit berücksichtigt.

## Patentansprüche

1. Verfahren zur Bestimmung der veränderlichen Wärmedurchgangszahl eines Behälters, bei dem ein penodischer Wärmestrom freigesetzt wird und die sich ergebenden Temperaturänderungen innerhalb und außerhalb des Behälters gemessen werden, weiterhin die einzeinen Terme der Wärmebilanz des Behälterinnenraums mit periodischen, vorzugsweise harmonischen Funktionen multipliziert und vorzugsweise über eine Schwingungsdauer integriert werden und daß daraus die Wärmedurchgangszahl berechnet wird,
dadurch gekennzeichnet,
daß es sich bei dem Behälter um einen chemischen Reaktor. vorzugsweise einen Rührkesselreaktor, handelt,
- daß um die Reaktionswärme abzuführen, der Reaktor einen Reaktormantelraum worin ein Wärmetauschmedium gefördert wird, aufweist,
- daß die Reaktortemperatur, T_{R}, die Manteleingangs- und Mantelausgangstemperatur T_{Me}, T_{Ma}, gemessen werden,
- daß die durch die periodisch zugeführte Heizleistung ergebene periodische Änderungen in der Reaktor- und Reaktormanteltemperatur detektiert und aufgezeichnet werden,
- daß die zeitliche Änderung der Wärmedurchgangszahl während der Reaktion zu einer zeitlichen Veränderung der Phasenlage führt, und
- daß bei der numerischen Auswertung der Temperaturschwingungen die sich aus den Zeitkonstanten des Wärmeübergangs des Reaktors und der Sensoren der Temperaturmessung ergebenden Phasenlageveränderung bei der Zuordnung der einzelnen Meßpunkte mit berücksichtigt werden.

2. Verfahren nach Anspruch 1, dadurch gekennzeichnet, daß die Temperatur des Reaktionsmediums geregelt wird.

3. Verfahren nach Anspruch 1, dadurch gekennzeichnet, daß die Temperatur des Wärmetauschermediums geregelt wird.

4. Verfahren nach Anspruch 1, dadurch gekennzeichnet, daß der periodische Wärmestrom als harmonische Schwingung freigesetzt wird.

5. Verfahren nach Anspruch 1, dadurch gekennzeichnet, daß zur Erzeugung des periodischen Wärmestroms eine elektrische, mit temperiertem flüssigem Wärmetauschermedium oder mit Heißdampfbetriebene Wärmequelle verwendet wird.

6. Verfahren nach Anspruch 1, dadurch gekennzeichnet, daß zur Erzeugung des periodischen Wärmestroms die Reaktanden mit periodisch veränderlicher Temperatur in den Reaktor dosiert werden.

7. Verfahren nach Anspruch 1, dadurch gekennzeichnet, daß zur Erzeugung des periodischen Wärmestroms ein geeigneter Term in den Algorithmus der Reaktortemperaturregelung aufgenommen wird.

8. Verfahren nach Anspruch 1, dadurch gekennzeichnet, daß der temperaturgeregelte Reaktor eine Temperaturregelung mit Störgrößenaufschaltung erhält, in der Form, daß die Schwingungen der Reaktortemperatur stark gedämpft oder unterbunden werden.

## Claims

1. A method for determining the changeable heat transmission coefficient of a container, in which a periodic flow of heat is released and the resulting changes in temperature are measured inside and outside the container, furthermore the individual terms of the heat balance of the interior of the container are multiplied with periodic, preferably harmonic, functions and preferably are integrated over an oscillation period and that the heat transmission coefficient is calculated therefrom,
characterised in that
- the container is a chemical reactor, preferably a stirred-tank reactor,
- in order to dissipate the reaction heat, the reactor has a reactor casing space in which a heat-exchange medium is conveyed,
- the reactor temperature T_{R} and the casing input and casing output temperatures T_{Ci}, T_{Co} are measured,
- the periodic changes in the reactor and reactor casing temperatures yielded by the periodically supplied heating energy are detected and recorded,
- the change over time of the heat transmission coefficient during the reaction results in a change of the phase relation over time, and
- upon numerical evaluation of the temperature oscillations the change in phase relation yielded from the time constants of the heat transmission of the reactor and of the sensors of the temperature measurement means are jointly taken into account when assigning the individual measuring points.

2. A method according to Claim 1, characterised in that the temperature of the reaction medium is regulated.

3. A method according to Claim 1, characterised in that the temperature of the heat-exchange medium is regulated.

4. A method according to Claim 1, characterised in that the periodic flow of heat is released as a harmonic oscillation.

5. A method according to Claim 1, characterised in that an electric heat source which is operated with temperature-controlled liquid heat-exchange medium or with superheated steam is used to produce the periodic flow of heat.

6. A method according to Claim 1, characterised in that the reactants are metered into the reactor at periodically changeable temperature to produce the periodic flow of heat.

7. A method according to Claim 1, characterised in that a suitable term is included in the algorithm of the regulation of the reactor temperature to produce the periodic flow of heat.

8. A method according to Claim 1, characterised in that the temperature-controlled reactor is given a temperature regulation means with disturbance-variable feed-forwards in such a form that the oscillations of the reactor temperature are greatly damped or eliminated.

## Revendications

1. Procédé destiné à la détermination du coefficient de transmission thermique variable d'un récipient dans lequel est libéré un flux thermique périodique, dans lequel les différences de température en résultant sont mesurées à l'intérieur et à l'extérieur du récipient, les différents termes du bilan thermique de l'espace intérieur du récipient étant en outre multipliés par des fonctions périodiques, de préférence harmoniques, et étant intégrés, de préférence sur une durée d'oscillations, et le coefficient de transmission thermique étant calculé à partir de là,
caractérisé en ce que
le récipient est un réacteur chimique, de préférence un réacteur de cuve mélangeuse,
- le réacteur comporte un espace d'enveloppe de réacteur dans lequel circule un fluide d'échange thermique pour évacuer la chaleur de réaction,
- la température T_{R} du réacteur, la température d'entrée T_{M.e} de l'enveloppe et la température de sortie T_{M.a} de l'enveloppe sont mesurées,
- les variations périodiques de la température du réacteur et de l'espace d'enveloppe dues à la puissance calorifique périodiquement amenée sont détectées et enregistrées,
- la variation dans le temps du coefficient de transmission thermique pendant la réaction conduit à une modification dans le temps des relations de phases, et
- lors de l'évaluation numérique des oscillations de température, les déphasages résultant des constantes de temps de la transmission thermique du réacteur et des détecteurs de mesure de température, sont pris en considération pour l'association des différents points de mesure.

2. Procédé selon la revendication 1, caractérisé en ce que la température du fluide de réaction est régulée.

3. Procédé selon la revendication 1, caractérisé en ce que la température du fluide d'échange thermique est régulée.

4. Procédé selon la revendication 1, caractérisé en ce que le flux thermique périodique est libéré en tant qu'oscillation harmonique.

5. Procédé selon la revendication 1, caractérisé en ce qu'une source de chaleur électrique fonctionnant avec du fluide d'échange thermique liquide tempéré ou avec de la vapeur chaude est utilisée pour générer le flux thermique périodique.

6. Procédé selon la revendication 1, caractérisé en ce que les réactants à température périodiquement variable sont dosés dans le réacteur pour générer le flux thermique périodique.

7. Procédé selon la revendication 1, caractérisé en ce qu'un terme approprié est enregistré dans l'algorithme de la régulation de température du réacteur pour générer le flux thermique périodique.

8. Procédé selon la revendication 1, caractérisé en ce que le réacteur régulé en température comporte une régulation de température à laquelle sont superposées des grandeurs perturbatrices, de telle sorte que les oscillations de la température du réacteur soient fortement atténuées ou supprimées.
